# EUROPEAN PATENT APPLICATION

(11) **EP 4 717 990 A1**
(43) Date of publication of application: **01.04.2026**
(21) Application number: 23940836.2
(22) Date of filing: 03.08.2023
(51) Int. Cl.: F24F 11/46, F24F 11/65, F24F 11/56, F24F 11/52, F24F 5/00, F24D 19/10, F24F 140/00

(54) **DEVICE AND METHOD FOR CONTROLLING COOLING AND HEATING IN HOME AND SYSTEM THEREFOR**

(30) Priority: 07.06.2023 KR 20230072882
(71) Applicant: LG Electronics Inc., Yeongdeungpo-gu Seoul 07336 (KR)
(72) Inventor: YU, Taejin, Seoul 08592 (KR); KIM, Dong Uk, Seoul 08592 (KR); KIM, Bublae, Seoul 08592 (KR); MIN, Seunghwan, Seoul 08592 (KR); KIM, Young Hyoug, Seoul 08592 (KR); OH, Junyoung, Seoul 08592 (KR)
(74) Representative: Vossius & Partner Patentanwälte Rechtsanwälte mbB
(86) International application number: PCT/KR2023/011406
(87) International publication number: WO 2024/253251

(57) **Abstract**

The present disclosure relates to a device and a method for controlling cooling and heating in a home, and a system therefor. To this end, the system according to the present disclosure may comprise: an energy storage device for transmitting power state information of a battery to a device for controlling cooling and heating; and the device for controlling cooling and heating, which is configured to set an energy level on the basis of the state of charge of the battery and the amount of power of a solar panel, which are included in the power state information, and is controlled according to the set energy level. Therefore, the present disclosure can efficiently use power according to the state of charge of the battery, and can prevent inconvenience due to noise generation by changing the time zone in which the device for controlling cooling and heating is operated.

## Description

### CROSS-REFERENCE TO RELATED APPLICATION

This application claims priority to and the benefit of Korean Patent Application No. 10-2023-0072882, filed on June 07, 2023, the disclosure of which is incorporated herein by reference in its entirety.

### TECHNICAL FIELD

The present disclosure relates to a device and method for controlling cooling and heating in a home, and to a system for the same.

### BACKGROUND ART

Generally, an energy storage system (ESS) stores produced electric power in each of the interconnection systems, including power plants, substations, transmission lines, and the like, and selectively and efficiently utilize the stored power at times when power is needed, thereby improving energy efficiency.

Such energy storage system is charged with electric power, and then discharges the charged power to supply the necessary power to a device requiring power. Thereby, the energy storage system enables a flexible supply of electric power.

For example, by utilizing the energy storage system, it is possible to flatten electric load fluctuations that occur across different times and seasons. Through this, the overall load factor can be improved, and the power generation cost can be reduced.

Further, since the operation cost and investment cost required for expansion of power facilities can be reduced, electricity rates can be lowered and energy can be conserved.

Such energy storage system may be installed in generation, transmission and distribution, and end-user sites in the power grid. And the energy storage system may provide various functions such as frequency regulation, stabilization of generator output using renewable energy sources, peak shaving, load leveling, and emergency power supply.

First conventional related art document (Korean Patent Registration No. 10-2414200, June 23, 2022) discloses a power control system resupplying shifted electric power in order to minimize the load of the charge amount of an energy storage system battery, wherein the system provides a load during a time period when the energy storage system's charge amount is stable.

However, first conventional related art merely discloses classifying shiftable time, non-shiftable time, and shiftable device, and selecting and operating an operation device based solely on the battery charge amount state of the energy storage system, but does not disclose that a solar panel and an energy storage system are interconnected with each other and an electronic device is operated by presetting its operation according to an energy level.

Additionally, the second conventional related art (U.S. Patent No. US 9,151,516 B2, October 6, 2015) discloses by measuring the current value supplied from a power supply device to automatically turn on/off the power to a water heater.

However, the second conventional related art controls only the on/off operation of the water heating device based solely on the power state of the power supply device to eliminate instability of electricity use in a home, but does not disclose that a solar panel and an energy storage system are interconnected with each other and an electronic device is operated by presetting its operation according to an energy level.

Therefore, there is a need for a power system that interconnects a solar panel, an energy storage system, and a power management device to enable detailed energy management, efficient energy utilization, and elimination of noise during specific periods through the control of operation time.

### SUMMARY OF DISCLOSURE

### TECHNICAL PURPOSE

Therefore, the present disclosure is to provide a system in which a solar panel, an energy storage system, and a power management device are interconnected to preheat, at a predetermined time period, hot water needed in the evening time, thereby enabling efficient energy use.

Also, the present disclosure is to provide a system that, based on the amount of power of a solar panel and the charge amount of a battery, sets a plurality of levels for power use, and then controls cooling and heating in a home based on the set level.

Also, the present disclosure is to provide a cooling and heating control device and method that, by adaptively preheating hot water during a time period not sensitive to noise using power stored in the battery of the energy storage system before the user returns home, fundamentally prevents occurrence of outdoor unit noise caused by water heating rather than reduces it.

Also, the present disclosure is to provide a portable terminal and a method that, by allowing the user to freely adjust the energy level set based on the amount of power of the solar panel and the charge amount of the battery via the portable terminal, adaptively respond to various user lifestyles.

The purposes of the present disclosure are not limited to the purposes mentioned above, and other purposes and advantages of the present disclosure which are not mentioned can be appreciated from the following description, and will be more clearly appreciated through the embodiments of the present disclosure. Furthermore, it is readily understood that the objects and advantages of the present disclosure can be achieved by the means set forth in the claims and combinations thereof.

### TECHNICAL SOLUTION

To achieve this purpose, the system according to the present disclosure may include an energy storage system transmitting power state information of a battery to a cooling and heating control device, and a cooling and heating control device setting an energy level based on a state of charge of a battery and an amount of power of a solar panel, which are included in the power state information, and controlled based on the set energy level.

Also, the present disclosure may include a portable terminal adjusting the energy level remotely.

Also, the cooling and heating control device according to the present disclosure may operate based on one energy level of the energy levels, which is set based on the current state of charge of the battery and the current amount of power of the solar panel.

Also, the cooling and heating control device according to the present disclosure may set a plurality of energy levels at which it controls a rotational speed of a motor to heat hot water to different temperatures, or not to heat the hot water, based on a current state of charge of a battery and a current amount of power of a solar panel.

Also, the cooling and heating control device according to the present disclosure may operate in different modes according to an energy level based on a current state of charge of a battery and a current amount of power of a solar panel.

Also, when a current charge rate of a battery exceeds a first ratio and a current amount of power of a solar panel exceeds a first reference amount, the cooling and heating control device according to the present disclosure may heat hot water to a first temperature using power charged in the battery.

Also, when a current charge rate of the battery is less than or equal to the first ratio and greater than a second ratio and a current amount of power of the solar panel is less than or equal to the first reference amount and greater than a second reference amount, the cooling and heating control device according to the present disclosure may heat hot water to a second temperature lower than the first temperature using power charged in the battery.

Also, the cooling and heating control device according to the present disclosure may operate a cooling and heating control device at a specific time using power stored in a battery.

Also, the cooling and heating control device according to the present disclosure may heat hot water to different temperatures according to different energy levels.

Also, the cooling and heating control device according to the present disclosure may heat hot water using power stored in a battery, or heat hot water using power supplied from a solar panel, according to the state of charge of the battery.

Also, the cooling and heating control device according to the present disclosure may periodically transmit power control information according to an energy level in a home to a portable terminal through a server.

### TECHNICAL EFFECT

According to the present disclosure, since the cooling and heating control device is controlled setting an energy level based on the state of charge of the battery and the amount of power of the solar panel, it is possible to efficiently use power according to the state of charge of a battery.

Also, according to the present disclosure, since a user remotely adjusts an energy level through a portable terminal, it is possible to efficiently use the cooling and heating control device to correspond to a user's lifestyle pattern.

Also, according to the present disclosure, since an operation of the cooling and heating control device is controlled based on any one energy level among energy levels, which is set based on the current state of charge of the battery and the current amount of power of the solar panel, it is possible to operate the cooling and heating control device during a time period during which the noises are not considered as a sensitive matter, thereby fundamentally preventing noise generation.

Also, according to the present disclosure, by operating the cooling and heating control device in different modes depending on an energy level based on the current state of charge of the battery and the current amount of power of the solar panel, it is possible to save power and prevent the unnecessary noise generation.

Also, according to the present disclosure, by operating the cooling and heating control device at a specific time period using power stored in the battery, it is possible to fundamentally prevent the unnecessary noise generation.

Also, according to the present disclosure, by heating hot water to different temperatures based on different energy levels, it is possible to adaptively adjust hot water heating time.

Also, according to the present disclosure, by periodically transmitting the power control information based on an energy level in a home to the portable terminal, it is possible to allow the user to conveniently check a power situation in the home or control power supply remotely.

In addition to the effects described above, specific effects of the present disclosure will be described below together with specific matters for practicing the invention.

### BRIEF DESCRIPTION OF DRAWINGS

FIG. 1 is a schematic diagram showing a system for controlling cooling and heating in a home according to an embodiment of the present disclosure.
FIG. 2 is a block diagram of a system for controlling cooling and heating in a home according to an embodiment of the present disclosure.
FIG. 3 is a flowchart showing an operation process of a system in which a cooling and heating control device according to an embodiment of the present disclosure sets an energy level and controls cooling and heating in a home.
FIG. 4 is a block diagram of a portable terminal that controls cooling and heating in a home according to an embodiment of the present disclosure.
FIG. 5 is a flowchart showing an operation process of the portable terminal 150 that controls cooling and heating in a home according to an embodiment of the present disclosure.
FIG. 6 is an example diagram in which a portable terminal displays a power state in a home according to an embodiment of the present disclosure.
FIG. 7 is an example diagram in which a portable terminal displays an interlocking state of power in a home according to an embodiment of the present disclosure.
FIG. 8 is an example diagram in which a portable terminal displays an energy level according to an embodiment of the present disclosure.
FIGS. 9(a) to 9(c) are example diagrams showing states of adjusting the energy level according to an embodiment of the present disclosure.
FIG. 10 is an example diagram illustrating a screen for adjusting the set time and hot water temperature according to an embodiment of the present disclosure.
FIG. 11 is an example view showing a cooling and heating control system in a home according to an embodiment of the present disclosure.
FIG. 12 is a block diagram of an outdoor unit controlled by the cooling and heating control device according to an embodiment of the present disclosure.
FIG. 13 is a block diagram of a cooling and heating control device for controlling cooling and heating in a home according to an embodiment of the present disclosure.
FIG. 14 is a flowchart showing an operation process of the cooling and heating control device according to an embodiment of the present disclosure.
FIG. 15 is an example diagram showing an operation state of the energy storage system according to an embodiment of the present disclosure.

### DETAILED DESCRIPTIONS

The purposes, features and advantages described above will be described in detail below with reference to the accompanying drawings, so that a person having ordinary knowledge in the technical field to which the present disclosure pertains can easily practice the technical idea of the present disclosure. In describing the present disclosure, if it is determined that a detailed description of a known technology related to the present disclosure may unnecessarily obscure the gist of the present disclosure, the detailed description thereof will be omitted. Hereinafter, preferred embodiments of the present disclosure will be described in detail with reference to the accompanying drawings. In the drawings, like reference signs are used to refer to like or similar components.

Although the terms "first", "second", and so on are used to describe various components, these components are not limited by these terms. These terms are merely used to distinguish one component from another component, and unless specifically stated to the contrary, it should be understood that a first component may also be a second component.

Throughout the specification, unless specifically stated to the contrary, each element may be singular or plural.

Throughout the present document, "A and/or B" means A, B, or A and B, unless otherwise specified, and "C to D" means equal to or greater than C and equal to or smaller than D unless otherwise specified.

Hereinafter, an energy storage system and method for controlling cooling and heating in a home and a system therefor according to some embodiments of the present disclosure will be described.

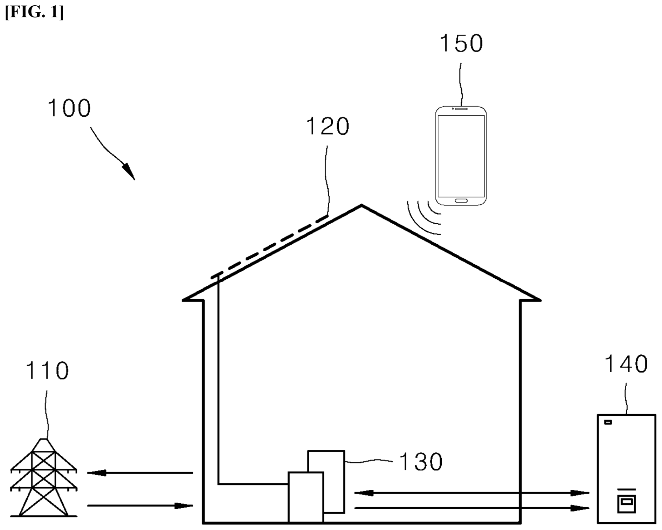

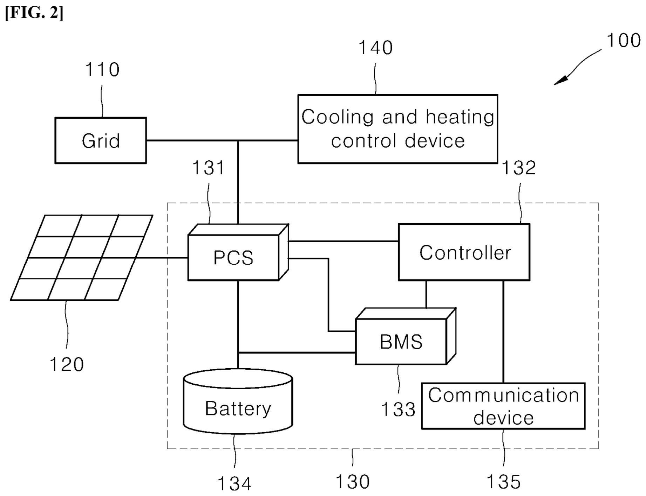

FIG. 1 is a schematic diagram showing a system for controlling cooling and heating in a home according to an embodiment of the present disclosure. FIG. 2 is a block diagram of a system for controlling cooling and heating in a home according to an embodiment of the present disclosure.

Referring to FIGS. 1 and 2, a system 100 for controlling cooling and heating in a home according to an embodiment of the present disclosure includes a solar panel 120 generating energy based on solar light, an energy storage system 130 storing and managing electric power supplied from the solar panel 120, and a cooling and heating control device 140 controlling the operation of a cooling device or a heating device in a home.

According to an embodiment, the system 100 may include a grid 110 supplying electric power, or may include a portable terminal 150 (e.g., a smartphone, a remote controller) remotely controlling the operation of at least one of the energy storage system 130 and the cooling and heating control device 140.

The configuration of the system 100 shown in FIG. 1 or FIG. 2 is one according to an embodiment, and the components of the system 100 are not limited to the embodiment shown in FIG. 1 or FIG. 2, and the addition, modification and removal of components may be made as needed.

According to an embodiment, the grid 110 includes a power plant, a substation, power transmission and distribution cable, and the like, is connected to a load, and manages the supply and trading of alternating current power. Here, the load may refer to a power trading unit such as a home, a building, and a complex.

According to an embodiment, the solar panel 120 is one which converts sunlight into electric energy, and in which when sunlight is delivered to a cell, a physical reaction is caused therein due to the photoelectric effect, thereby generating direct current.

According to an embodiment, the energy storage system (ESS) 130 is a device which stores the generated power (e.g., the power generated by the solar panel 120) in a battery 134, and then supplies the power stored in the battery 134 at a time when power is needed, thereby increasing overall power use efficiency.

This energy storage system 130 is categorized into a battery type or a non-battery type. The battery-type system may include a lithium (Li) battery, a sodium-sulfur (NaS) battery, a redox flow battery, a supercapacitor, and the like. And, the non-battery type system may include pumped-storage hydroelectricity, compressed air storage, flywheel, and the like.

And, the energy storage system 130 is connected to the cooling and heating control device 140, which controls a cooling device or a heating device in the home, through communication (e.g., Modbus), and may set or identify an energy level by monitoring the cooling and heating control device 140.

For example, the energy storage system 130 may directly transmit a signal to the cooling and heating control device 140 based on wired communication or wireless communication.

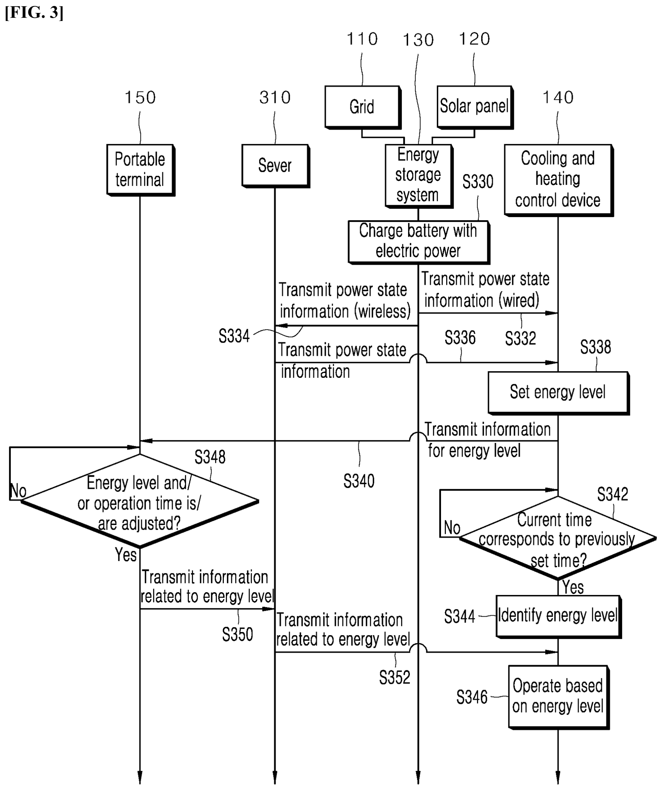

Alternatively, the energy storage system 130 may also transmit a signal to a server 310 (see FIG. 3) so that it is delivered to the cooling and heating control device 140. In this case, the server 310 (see FIG. 3) may deliver the signal received from the energy storage system 130 to the cooling and heating control device 140.

According to an embodiment, the cooling and heating control device 140 (e.g., Air to Water Heat Pump, AWHP) may perform a function of cooling or heating an indoor space by heat exchange between a refrigerant circulating through an outdoor unit and water circulating through an indoor unit, or supplying hot water to the indoor space, or heating water. Such a cooling and heating control device 140 may be operated by electric power supplied from the energy storage system 130.

According to an embodiment, the portable terminal 150 has an application (e.g., ThinQ application) installed thereon, which can remotely control operations of home appliances (not shown), the energy storage system 130, and the cooling and heating control device 140 in the home. Alternatively, the portable terminal 150 may include a remote controller remotely controlling the cooling and heating control device 140 or the energy storage system 130.

In the system 100 according to the present disclosure including the above-described configuration, the energy storage system 130 may set an energy level related to control of the cooling and heating control device 140 based on a state of charge of the battery and an amount of power supplied from the solar panel 120. Also, the energy storage system 130 may identify one of the set energy levels based on a current state of charge of the battery and a current amount of power of the solar panel 120, and may control an operation of the cooling and heating control device based on the identified energy level.

Alternatively, in the system 100 according to the present disclosure, when the energy storage system 130 transmits information on a power state (e.g., a current state of charge of the battery, an amount of power supplied from the solar panel 120, and the like) to the cooling and heating control device 140, the cooling and heating control device 140 may set an energy level based on the information received from the energy storage system 130, and may operate based on the set energy level.

Referring to FIG. 2, the energy storage system 130 according to an embodiment of the present disclosure may include the battery 134 charged with and/or discharging energy (e.g., electric power), a BMS (Battery Management System) module 133 controlling the charge and discharge of the battery 134 and managing information related to the battery 134, a PCS (Power Conditioning System) module 131 converting input for charging the battery 134 into direct current power and converting output from discharging of the battery 134 into alternating current power, a communication device 135, and a controller 132 monitoring and controlling the BMS module 133 and the PCS module 131.

According to an embodiment, the battery 134 may be connected to the solar panel 120 and the grid 110 through the PCS module 131. Although the present disclosure describes the solar panel 120, this is merely an embodiment example, and it may include not only the solar panel 120 but also various power generation modules producing renewable energy such as wind power and geothermal power.

According to an embodiment, the battery 134 may be charged by at least one of direct current power generated by the solar panel 120 and direct current power supplied from the grid 110 and converted by the PCS module 131, based on a charging drive instruction of the BMS module 133. And, the battery 134 supplies cooling and heating zero electric power through the PCS module 131 based on a discharging drive instruction of the BMS module 133.

And, although only one battery 134 is shown in FIG. 2, the system 100 according to the present disclosure is not limited to this, and the battery 134 may include a plurality of battery cells, or may be a battery structure connected in parallel, in series, or in series-parallel. The battery 134 may be charged by receiving electric power from the solar panel 120, or may provide the stored electric power to a plurality of loads (e.g., home appliances, the cooling and heating control device 140).

According to an embodiment, the PCS module 131 may convert direct current power by at least one of the battery 134 and the grid 110 into alternating current power, and may supply the converted alternating current power to the cooling and heating control device 140. And, the PCS module 131 converts alternating current power of the grid 110 into direct current power which is input to the battery 134 to charge the battery 134.

As an example, for the power conversion, the PCS module 131 may include a plurality of inverters and converters, transformers, circuit breakers, and measuring instruments.

According to an embodiment, the PCS module 131 converts electrical characteristics such as frequency and voltage in order to receive electric power from the solar panel 120 (or the grid 110) and then store the power in the battery 134, or to supply the power stored in the battery 134 to a load (e.g., the cooling and heating control device 140). The PCS module 131 may adjust characteristics of electric power, which are different between when storing the power (direct current) and when using the power (alternating current).

For example, when storing electric power in the battery 134, the PCS module 131 may convert alternating current to direct current and store it, and when outputting electric power stored in the battery 134, the PCS module may convert direct current into alternating current and outputs it. This PCS module 131 may control the charge and discharge of the battery 134 based on a remaining capacity of the battery 134.

As described above, in addition to the power conversion function, the PCS module 131 may perform monitoring of the operation state of the energy storage system 130, quality control, grid protection during a power outage, independent operation, and the like.

According to an embodiment, the communication device 135 may include at least one circuit capable of transmitting and receiving at least one control signal, information, or data with the portable terminal 150 and the cooling and heating control device 140.

Also, the communication device 135 may communicate with the cooling and heating control device 140 in the home, and the portable terminal 150 (e.g., smartphone, laptop, tablet PC, or a remote controller remotely controlling the cooling and heating control device 140) based on various communication methods (e.g., Bluetooth, WLAN (Wireless Local Area Network), NFC (Near Field Communication), or Beacon). And, the energy storage system 130 may control the operation of the cooling and heating control device 140 based on the energy level through such communication.

According to an embodiment, the controller 132 may include a PMS (Power Management System) module monitoring the BMS module 133 and the PCS module 131 and managing the power source of each of the BMS module 133 and the PCS module 131, and an EMS (Energy Management System) module controlling the operation of the PMS module.

According to an embodiment, the BMS module 133 is connected to the battery 134, and controls the charging or discharging operation of the battery 134 according to the control of the controller 132 (e.g., PMS module). And the BMS module 133 may perform functions such as an overcharge protection function, an overdischarge protection function, an overcurrent protection function, an overvoltage protection function, and an overheat protection function in order to protect the battery 134.

And, the BMS module 133 may monitor the state of the battery 134, and may control the charging and/or discharging operations of the battery 134. Also, the BMS module 133 may monitor the state of the battery 134, including the battery remaining capacity, and may deliver information on the monitored state of the battery 134 (for example, voltage, current, temperature, remaining power amount, lifespan, remaining capacity, etc.) to the controller 132.

According to an embodiment, the PMS module may control the PCS module 131 based on data related to the battery 134 received from the BMS module 133.

And, the PMS module may monitor the state of the battery 134, and may monitor the state of the PCS module 131. Also, the PMS module may control the PCS module 131 based on data related to the battery 134 received from the BMS module 133.

Also, the PMS module may monitor and collect information for the state of the battery 134 using the BMS module 133.

Also, the controller 132 may run software to control at least one component in the energy storage system 130 based on wired communication or wireless communication. And, the controller 132 may perform various data processing and computations based on wired communication or wireless communication.

According to an embodiment, the controller 132 may be implemented as at least one physical element selected from among ASICs (application specific integrated circuits), DSPs (digital signal processors), DSPDs (digital signal processing devices), PLDs (programmable logic devices), FPGAs (field programmable gate arrays), processors, microcontrollers, and microprocessors.

According to an embodiment, the controller 132 may set energy levels based on a state of charge of the battery 134 and an amount of power of the solar panel 120, and may set a temperature for each energy level.

FIG. 3 is a flowchart showing an operation process of a system in which a cooling and heating control device according to an embodiment of the present disclosure sets an energy level and controls cooling and heating in a home.

Hereinafter, with reference to FIGS. 1, 2, and 3, an operation process of a system in which an energy storage system according to an embodiment of the present disclosure sets an energy level and controls cooling and heating in a home will be described in detail.

According to an embodiment, the energy storage system 130 may charge the battery with electric power (S330). The energy storage system 130 may charge the battery 134 with electric power supplied from the solar panel 120 mainly during daytime. Also, the energy storage system 130 may charge the battery 134 with electric power supplied from the grid 110 mainly during nighttime. In the present disclosure, the charging time by the solar panel 120 or the grid 110 is not limited to the above.

According to an embodiment, the energy storage system 130 may transmit power state information based on wired communication with the cooling and heating control device 140 (S332). The energy storage system 130 may directly transmit, to the cooling and heating control device 140, power state information regarding a current state of charge of the battery 134 and an amount of power supplied from the solar panel 120 based on wired communication.

According to an embodiment, the energy storage system 130 may transmit the power state information to the server 310 in order to send the power state information to the cooling and heating control device 140 (S334). In the case where the energy storage system 130 and the cooling and heating control device 140 cannot transmit and receive signals based on wired communication, the energy storage system 130 may also transmit the information to the cooling and heating control device 140 via the server 310.

According to an embodiment, the server 310 may transmit the power state information to the cooling and heating control device 140 (S336). When the power state information including an identifier of a cooling and heating control device is received from the energy storage system 130, the server 310 may select the corresponding cooling and heating control device through the identifier, and may transmit the power state information to the selected cooling and heating control device.

According to an embodiment, the cooling and heating control device 140 may set the energy level (S338). The cooling and heating control device 140 may set the energy level based on the power state information acquired in the process (S332) or the process (S336). The cooling and heating control device 140 may set the energy level so that it operates through the energy level based on the current state of charge of the battery 134 and the amount of power supplied from the solar panel 120.

If the energy storage system 130 sets the energy level based on the state of charge of the battery 134 and the amount of power of the solar panel 120, and transmits information regarding the set energy level to the cooling and heating control device 140, the cooling and heating control device 140 may omit the process of setting the energy level in the process (S338).

According to an embodiment, the cooling and heating control device 140 may transmit information related to the set energy level to the portable terminal 150 through the server 310 (S340). The cooling and heating control device 140 may transmit information regarding the set energy level (e.g., operation time, set temperature, charge rate of the battery 134, amount of power of the solar panel 120, or the like according to each energy level) to the portable terminal 150 via the server 310.

Also, the energy storage system 130 may transmit at least a portion of power control information including the current amount of power supplied from the solar panel 120, the current state of charge of the battery 134, the selling price at which the electric power charged in the battery 134 is purchased by the power company, the power consumption amount in the home, and the like to the portable terminal 150 via the server 310. In this way, by the energy storage system 130 transmitting the power control information to the portable terminal 150, the portable terminal 150 (e.g., smartphone) can display various information regarding the energy level through an application (e.g., ThinQ application).

According to an embodiment, the cooling and heating control device 140 may identify whether the current time corresponds to a previously set time (S342). The cooling and heating control device 140 may periodically identify whether the current time has reached the time set in the energy level. This is in order that the cooling and heating control device 140 heats hot water based on the corresponding energy level when the current time has reached the set time.

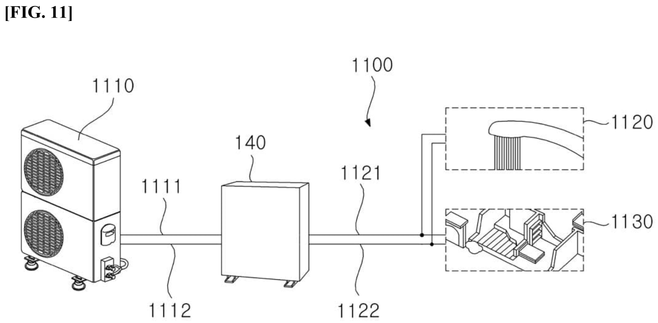

According to an embodiment, the cooling and heating control device 140 may identify the energy level (S344). When the cooling and heating control device 140 determines that the current time has reached the time set in the energy level, it may operate the outdoor unit 1110 of FIG. 11 installed outside the home to heat water. For example, the set time is a time previously set so that the outdoor unit installed outside the home operates during a specific time (e.g., a time during which the noise of the outdoor unit is permissible). This specific time may be variably adjusted by the user. Also, the specific time may differ depending on the living culture of each country (e.g., a culture sensitive to noise generation).

According to an embodiment, the cooling and heating control device 140 may operate based on the energy level (S346). The cooling and heating control device 140 may operate based on the set temperature for hot water, the operation time, and the standby time included in different control signals according to each energy level. For example, the cooling and heating control device 140 may heat hot water by adjusting the RPM (Revolutions Per Minute) of the motor of the outdoor unit 1110 (see FIG. 11) based on the energy level, or may heat hot water by operating the motor at a specific time.

For example, the cooling and heating control device 140 may directly transmit the control signal to the energy storage system 130 using wired communication in order to control the operation of the energy storage system 130 based on the energy level. Alternatively, the cooling and heating control device 140 may transmit the control signal to the energy storage system 130 through the server 310 using wireless communication in order to control the operation of the energy storage system 130 based on the energy level.

This control signal may include an instruction for controlling the power supply of the battery 134 in order to heat hot water. And the energy storage system 130 that has received this control signal may operate in any one of a first mode to a third mode.

According to an embodiment, the portable terminal 150 may identify whether the energy level and/or the operation time is/are adjusted (S348). The portable terminal 150 may display, through an application (e.g., ThinQ application), power control information received from the energy storage system 130 via the server 310.

And the portable terminal 150 may receive a command for adjusting the energy level displayed through the application. The portable terminal 150 may receive this command through various means or methods, such as voice, touch, keyword, or the like.

For example, through the application, the user may adjust the state of charge of the battery 134 and the amount of electrical power from the solar panel 120 previously set in each energy level, and may input a set time to start hot water heating (e.g., a time earlier than the return home time) and the hot water temperature so that the heating device can heat hot water in advance before the user returns home.

According to an embodiment, the portable terminal 150 may transmit information related to the adjustment to the server 310 (S350). The portable terminal 150 may transmit to the server 310 information related to at least one of the energy level and the operation time input (or adjusted) by the user through the application (e.g., ThinQ application). For example, the information may include the location information of the portable terminal 150. In this case, the server 310 may analyze and classify information received from a plurality of portable terminals, analyze adjustment patterns in a specific region, and based on this, may provide a user (e.g., transmit to a portable terminal) with information regarding the energy level in that region.

According to an embodiment, the server 310 may transmit information related to the adjustment to the cooling and heating control device 140 (S352). The server 310 may analyze the information related to the adjustment received from the portable terminal 150 to identify the cooling and heating control device, and transmit the information to the corresponding cooling and heating control device 140.

Thereafter, the cooling and heating control device 140 may operate based on the set temperature for hot water, operation time, and standby time included in different control signals according to each energy level. For example, the cooling and heating control device 140 may heat hot water by adjusting the RPM of the motor of the outdoor unit 1110 (see FIG. 11) based on the energy level, or may heat hot water by operating the motor at a specific time.

As described in FIG. 3, the cooling and heating control device 140 may set an energy level for heating hot water based on the current state of charge of the battery and the amount of power supplied from the solar panel 120, and may operate based on the energy level.

Additionally, according to the present disclosure, the energy storage system 130 may set an energy level for the operation of the cooling and heating control device 140 based on the current state of charge of the battery and the amount of electrical power supplied from the solar panel 120, and may control the operation of the cooling and heating control device 140 based on the energy level.

To this end, the controller 132 of the energy storage system 130 may store instructions programmed to be executable by the processor 1350 of the cooling and heating control device 140.

In this way, various embodiments according to the present disclosure may be performed by the cooling and heating control device 140, or may be performed by the energy storage system 130, or by a separate device independently configured by combining their functions.

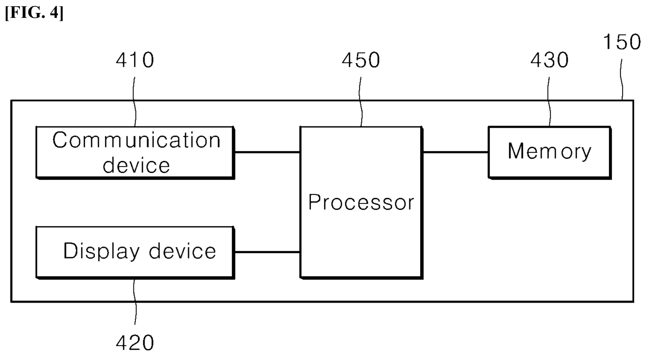

FIG. 4 is a block diagram of a portable terminal that controls cooling and heating in a home according to an embodiment of the present disclosure.

Referring to FIG. 4, the portable terminal 150 that controls cooling and heating in a home according to an embodiment of the present disclosure may include a communication device 410, a display device 420, a memory 430, and a processor 450.

The configuration of the portable terminal 150 shown in FIG. 4 is one according to an embodiment, and the components of the portable terminal 150 are not limited to the embodiment shown in FIG. 4, and the addition, modification and removal of components may be made as needed.

According to an embodiment, the communication device 410 may include at least one circuit capable of transmitting and receiving at least one signal or information with the energy storage system 130 through the server 310. When the energy level and the operation time of the cooling and heating control device 140 are adjusted by the user, the communication device 410 may transmit information related to the adjustment to the cooling and heating control device 140 through the server 310.

According to an embodiment, the display device 420 may display various information related to power in the home on an application (e.g., ThinQ application).

For example, the display device 420 may display, under the control of the processor 450, an application for remotely controlling at least one of the energy storage system 130 and the cooling and heating control device 140. Also, the display device 420 may display various information related to power in the home on the application.

According to an embodiment, the memory 430 may include a volatile memory or a non-volatile memory. And the memory 430 may store information, data, programs, applications, and the like necessary for the operation of at least one of the energy storage system 130 and the cooling and heating control device 140.

For example, the processor 450 may execute an application (e.g., ThinQ application) stored in the memory 430, and through the executed application, may acquire an input for remotely controlling (or setting, changing modes, levels, etc.) the operation of at least one of the energy storage system 130 and the cooling and heating control device 140.

Also, the application may include instructions for requesting a channel connection to the server 310 and for connecting a channel with the server 310 based on the request when receiving approval from the server 310.

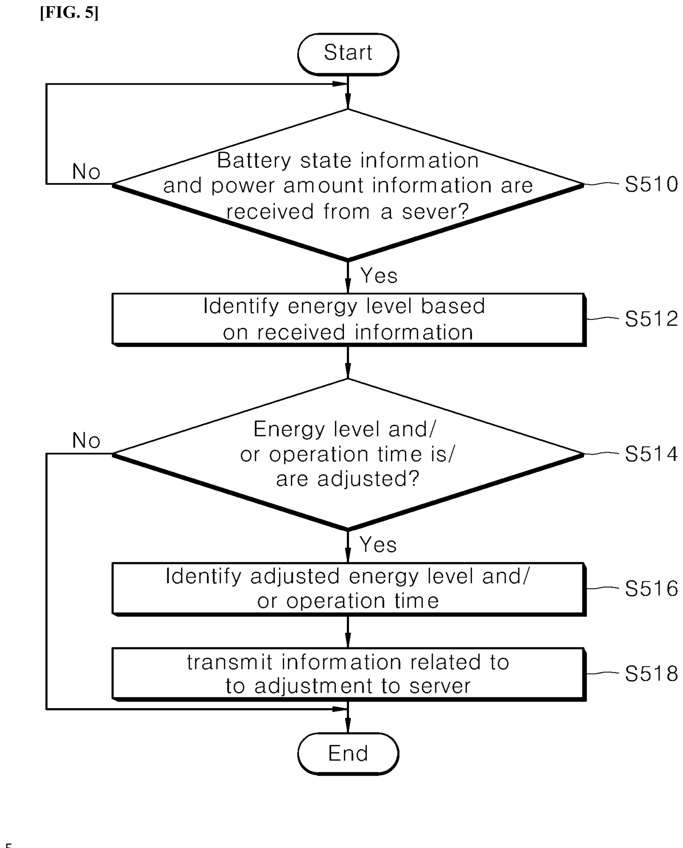

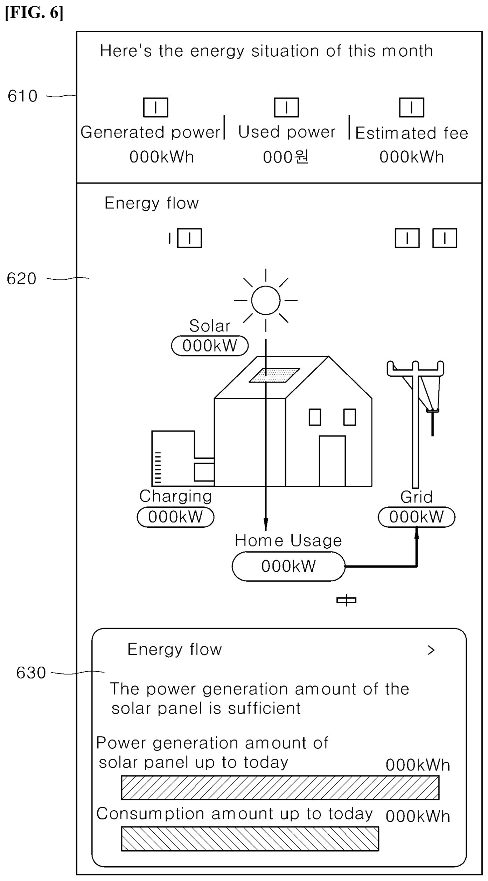

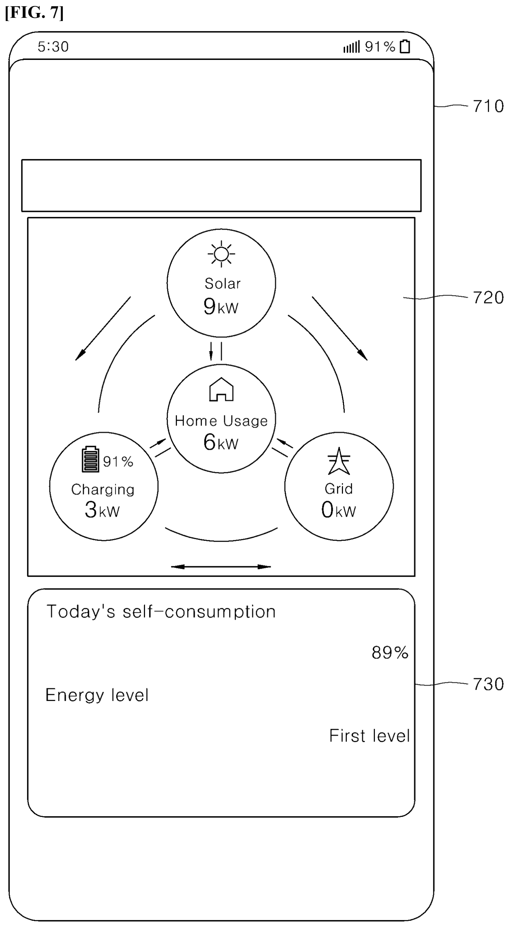

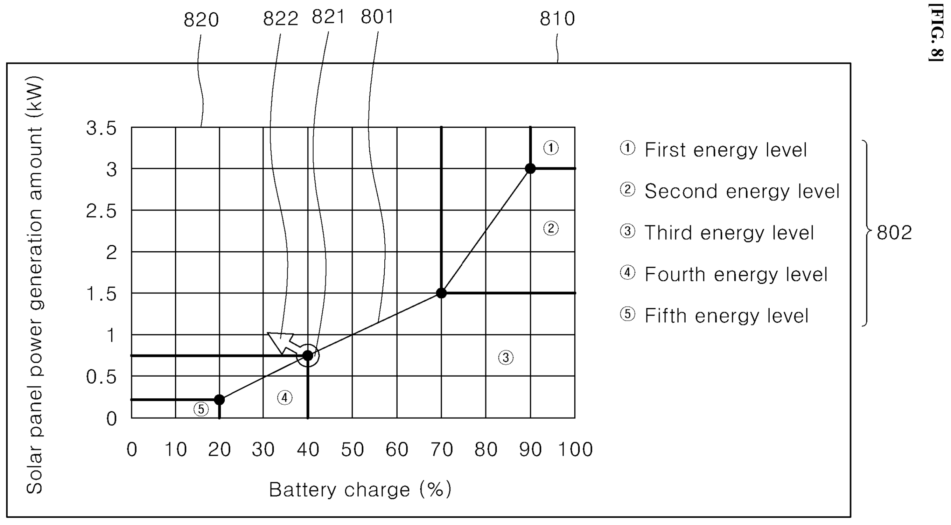

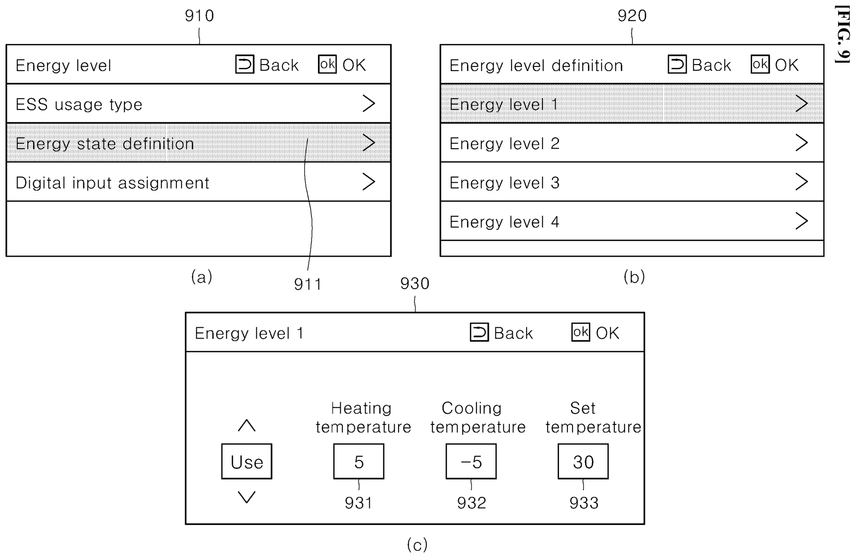

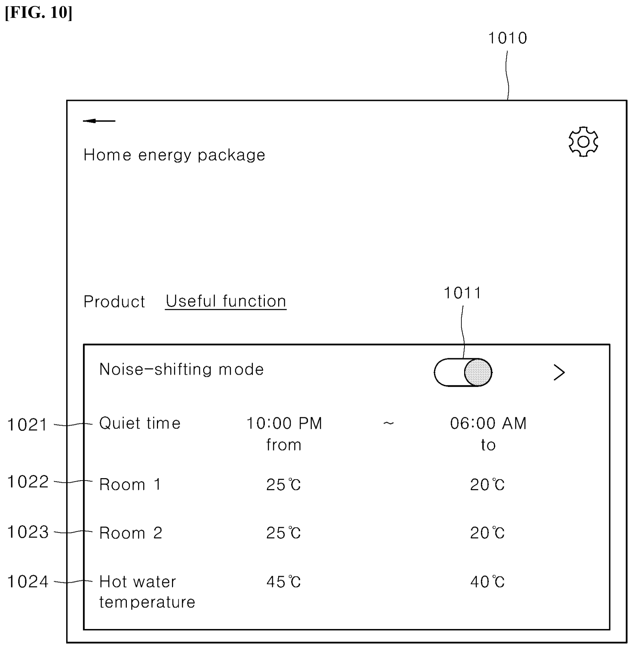

FIG. 5 is a flowchart showing an operation process of the portable terminal 150 that controls cooling and heating in a home according to an embodiment of the present disclosure. FIG. 6 is an example diagram in which a portable terminal displays a power state in a home according to an embodiment of the present disclosure. FIG. 7 is an example diagram in which a portable terminal displays an interlocking state of power in a home according to an embodiment of the present disclosure. FIG. 8 is an example diagram in which a portable terminal displays an energy level according to an embodiment of the present disclosure. FIGS. 9(a) to 9(c) are example diagrams showing states of adjusting the energy level according to an embodiment of the present disclosure. FIG. 10 is an example diagram illustrating a screen for adjusting the set time and hot water temperature according to an embodiment of the present disclosure.

Hereinafter, referring to FIGS. 4 to 10, the operation process of the portable terminal 150 that controls cooling and heating in a home according to an embodiment of the present disclosure will be described in detail as follows.

According to an embodiment, the portable terminal 150 (e.g., the processor 450) may identify whether power control information is received (S510). The portable terminal 150 (e.g., the processor 450) may acquire, through the communication device 410, information related to an energy level set in the energy storage system 130 (e.g., operation time, temperature, charge rate of the battery 134, amount of power of the solar panel 120, and the like set for each energy level).

Additionally, the portable terminal 150 (e.g., the processor 450) may acquire, through the communication device 410, power control information including at least a portion of various information related to power in the home, such as the current amount of power supplied from the solar panel 120, the current state of charge of the battery 134, the selling price at which the electric power charged in the battery 134 is purchased by the power company, the power consumption amount in the home, and the like.

According to an embodiment, when the portable terminal 150 (e.g., the processor 450) acquires information related to power in the home (e.g., at least some of the state of charge of the battery 134, the amount of power of the solar panel 120, the current state of charge of the battery 134, the current amount of power of the solar panel, and the power consumption amount in the home) received from the energy storage system 130, it may set (or adjust) an energy level based on the acquired information.

And the portable terminal 150 (e.g., the processor 450) may display information related to the energy level through an application (e.g., ThinQ application).

Referring to FIG. 6, the portable terminal 150 (e.g., the processor 450) may display, on an application (e.g., ThinQ application), a screen 610 including various information related to the power state in the home.

For example, the screen 610 may include information 620 indicating the power situation in the home (e.g., the amount of power supplied in real time from the solar panel 120, the amount of power charged into the battery 134, the amount of power consumed in real time, and the amount of power supplied to the grid 110).

In addition, the screen 610 may include information 630 indicating the amount of power supplied from the solar panel 120 for each day and the amount of power consumed in the home for each day.

For example, the screen 610 may also include the current power generation amount of the solar panel 120, the current state of charge of the battery 134, the current power consumption amount, and the amount of power currently being sold to the grid.

The portable terminal 150 (e.g., the processor 450) may receive this information related to the power situation to display it in real time on an application (e.g., ThinQ application).

Referring to FIG. 7, the portable terminal 150 (e.g., the processor 450) may display, on an application (e.g., ThinQ application), a screen 710 including various information related to the interlocking state in the home.

For example, the screen 710 may include information 720 indicating the interlocking state of the grid 110, the solar panel 120, the battery 134, and the consumption power amount, and information 730 related to the energy level.

The portable terminal 150 (e.g., the processor 450) may receive information related to this interlocking state of power to display it in real time on an application (e.g., ThinQ application).

Also, although not shown in FIGS. 6 and 7, the screens 610, 710 may also display the amount of power consumed by each home appliance in the home.

According to an embodiment, the portable terminal 150 (e.g., the processor 450) may identify the energy level based on the received information (S512). For example, when information related to the energy level is received from the energy storage system 130, the portable terminal 150 (e.g., the processor 450) may identify the operation time and temperature of the cooling and heating control device 140, the charge rate of the battery 134, the amount of power of the solar panel 120, and the like, as set for each energy level. Such information related to the energy level may be displayed on the application through the display device 420, and may be adjusted by user input.

According to an embodiment, the portable terminal 150 (e.g., the processor 450) may identify whether an input for adjusting the energy level, hot water temperature, room temperature, and/or operation time is received (S514). The portable terminal 150 (e.g., the processor 450) may acquire an input for adjusting the energy level, hot water temperature, room temperature, and/or operation time based on a touch on the display device 420, user voice, and the like.

For example, in a state in which a screen related to the energy level is displayed on the application, when a touch-based input (e.g., touch and drag) by the user on the energy level within the screen is received, the portable terminal 150 (e.g., the processor 450) may adjust the energy level in real time in response to this input to display it through the display device 420.

Referring to FIG. 8, the portable terminal 150 (e.g., the processor 450) may display a screen 810 related to the energy level on the application.

The screen 810 may include a graph 801 indicating the charge rate of the battery 134 and the power generation amount of the solar panel 120 for each energy level, and information 802 related to the standby time at each energy level.

According to an embodiment, the portable terminal 150 (e.g., the processor 450) may sense, through the screen 810, a user input for adjusting the charge rate of the battery 134 and the power generation amount of the solar panel 120 according to the energy level.

For example, when any one point 821 on the graph 801 is moved 822 through touch and drag by the user, the portable terminal 150 (e.g., the processor 450) may recognize the touch and drag and, based on the movement 822, adjust in real time the charge rate of the battery 134 and the power generation amount of the solar panel 120 according to the energy level.

And, when the charge rate of the battery 134 and the power generation amount of the solar panel 120 according to the energy level are changed, the portable terminal 150 (e.g., the processor 450) may generate a control signal for controlling the operation of the cooling and heating control device 140 based on the changed information.

Referring to FIGS. 9(a) and 9(b), the portable terminal 150 (e.g., the processor 450) may identify an input for adjusting the energy level through the screen.

For example, in a state in which a first screen 910 is displayed, when a menu 911 defining the state of the energy level is selected by the user, the portable terminal 150 (e.g., the processor 450) displays a second screen 920.

Thereafter, in a state in which the second screen 920 is displayed, when the energy level (e.g., Energy Level No. 1) is selected by the user, the portable terminal 150 (e.g., the processor 450) may display various information (e.g., set temperature, operation time, etc.) set in the selected energy level (e.g., Energy Level No. 1).

Referring to FIG. 9(c), the portable terminal 150 (e.g., the processor 450) may display a third screen 930 including the temperature set in the selected energy level (e.g., Energy Level No. 1). The portable terminal 150 (e.g., the processor 450) may identify the temperature set by the user through the third screen 930.

For example, the portable terminal 150 (e.g., the processor 450) may adjust a heating temperature 931, a cooling temperature 932, and a set temperature 933 based on the user's input through the third screen 930.

And, when the setting information of the energy level is changed, the portable terminal 150 (e.g., the processor 450) may generate a control signal for controlling the operation of the cooling and heating control device 140 based on the changed information.

Referring to FIG. 10, the portable terminal 150 (e.g., the processor 450) may display a screen 1010 capable of receiving a user's input for adjusting a noise-shifting mode (that is, a mode for adjusting the time during which noise is generated by the outdoor unit by adjusting the operation time of the cooling and heating control device 140), and the temperature of each room, and the hot water temperature.

For example, the portable terminal 150 (e.g., the processor 450) may identify the noise-shifting mode 1011, the silent time 1021, the temperature of a first room 1022, the temperature of a second room 1023, and the hot water temperature set by the user through the screen 1010.

And, when the information related to the noise-shifting mode is changed, the portable terminal 150 (e.g., the processor 450) may generate a control signal for controlling the operation of the cooling and heating control device 140 based on the changed information.

According to an embodiment, the portable terminal 150 (e.g., the processor 450) may identify the adjusted energy level, hot water temperature, room temperature, and/or operation time (S516). The portable terminal 150 (e.g., the processor 450) may identify the energy level, hot water temperature, room temperature, and/or operation time which are adjusted based on the input (e.g., touch, voice, etc.).

According to an embodiment, the portable terminal 150 (e.g., the processor 450) may transmit information related to the adjustment to the server (S518). The portable terminal 150 (e.g., the processor 450) may transmit the adjusted information (e.g., information related to the adjusted energy level, hot water temperature, room temperature, and/or operation time) to the server 310 through the communication device 410.

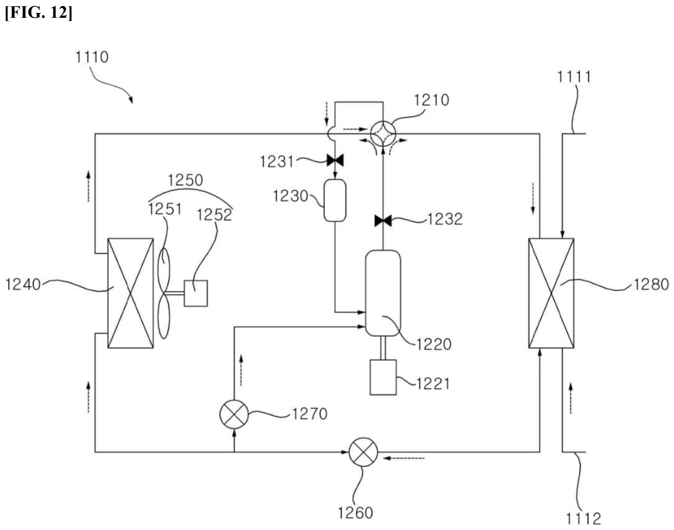

FIG. 11 is an example view showing a cooling and heating control system in a home according to an embodiment of the present disclosure. FIG. 12 is a block diagram of an outdoor unit controlled by the cooling and heating control device according to an embodiment of the present disclosure.

Referring to FIGS. 11 and 12, a cooling and heating control system 1100 in a home according to an embodiment of the present disclosure may include the cooling and heating control device 140 and the outdoor unit 1110. Also, the cooling and heating control system 1100 may also include a hot water supply part 1120 and a heating part 1130 connected to the cooling and heating control device 140.

According to an embodiment, the outdoor unit 1110 may be connected with the cooling and heating control device 140 through outdoor pipes 1111, 1112. In this case, the outdoor unit 1110 may be disposed outdoors.

According to an embodiment, based on the energy level, the outdoor unit 1110 may receive water from the cooling and heating control device 140 through one of the outdoor pipes 1111, 1112 to heat the water, and deliver the heated water to the cooling and heating control device 140 through the other one of the outdoor pipes 1111, 1112.

According to an embodiment, the outdoor unit 1110 may include a compressor 1220, a motor 1221 for the compressor, an accumulator 1230, an outdoor heat exchanger 1240, an outdoor blower 1250 composed of an outdoor fan 1251 and a motor 1252 for the outdoor fan, a main valve 1260 (e.g., electronic expansion valve (EEV)), a water-refrigerant heat exchanger 1280, and/or a heating/cooling switching valve 1210.

For example, the compressor 1220 performs the function of compressing the refrigerant. And, the motor 1221 for the compressor drives the compressor 1220. Also, the accumulator 1230 stores vaporized refrigerant, removes moisture and foreign substances, and then supplies refrigerant of a certain pressure to the compressor 1220.

According to an embodiment, the motor 1252 for the outdoor fan may operate while adjusting the RPM (revolutions per minute) based on a control signal corresponding to the energy level transmitted from the cooling and heating control device 140.

Also, the outdoor blower 1250 may include an outdoor heat exchanger 1240 serving to dissipate heat from the compressed refrigerant, an outdoor fan 1251 disposed in the one side of the outdoor heat exchanger 1240 to promote heat dissipation of the refrigerant, and a motor 1252 for the outdoor fan rotating the outdoor fan 1251.

Also, the main valve 1260 (e.g., electronic expansion valve (EEV)) expands the condensed refrigerant, and the water-refrigerant heat exchanger 1280 allows heat exchange to take place between the refrigerant and water. And, the cooling/heating switching valve 1210 performs the function of changing the flow path of the compressed refrigerant.

According to an embodiment, the outdoor unit 1110 may operate based on the energy level according to the mode of the heat pump. For example, when the heat pump is set to a cooling mode, the outdoor unit 1110 may operate such that the refrigerant compressed by the compressor 1220 moves to the water-refrigerant heat exchanger 1280 through the outdoor heat exchanger 1240. For example, when the heat pump is set to a heating mode, the outdoor unit 1110 may operate such that the refrigerant compressed by the compressor 1220 based on the energy level moves to the outdoor heat exchanger 1240 through the water-refrigerant heat exchanger 1280.

And, the outdoor unit 1110 may include a sub-valve 1270 adjusting the amount of refrigerant injected into the compressor 1220. Here, the sub-valve 1270 may be an electronic electronic valve (EEV). When refrigerant is injected into compressor 1220 via the sub-valve 1270, limitation of refrigerant suction restricted by density of refrigerant sucked into compressor 1220 and volume of compression chamber of compressor 1220 can be overcome, so compression capability of compressor 1220 can be improved. Through this, amount of circulated refrigerant can be increased, and performance of cooling operation or heating operation of heat pump can be improved.

Additionally, the outdoor unit 1110 may include at least one shut-off valve 1231, 1232 configured to block the movement of the refrigerant. The at least one shut-off valve 1231, 1232 may be a two-way valve.

For example, the first shut-off valve 1232 may be disposed in a flow path through which the refrigerant compressed by the compressor 1220 is discharged to move to the outdoor heat exchanger 1240 or the water-refrigerant heat exchanger 1280. This first shut-off valve 1232 may be disposed in a pipe connected to a discharge portion of the compressor 1220 from which the compressed refrigerant is discharged.

For example, the second shut-off valve 1231 may be disposed in a flow path through which the refrigerant moves to the compressor 1220 via the outdoor heat exchanger 1240 and the water-refrigerant heat exchanger 1280. This second shut-off valve 1231 may be disposed in a pipe connecting between the accumulator 1230 and the cooling/heating switching valve 1280.

And, the water-refrigerant heat exchanger 1280 may be connected to a plurality of outdoor pipes 1111, 1112. Water supplied through one of the plurality of outdoor pipes 1111, 1112 may be discharged through the other of the plurality of outdoor pipes 1111, 1112 after undergoing heat exchange with the refrigerant.

The cooling and heating control device 140 may supply water to the outdoor unit 1110 through any one of the plurality of outdoor pipes 1111, 1212, and may receive water from the outdoor unit 1110 through the other of the plurality of outdoor pipes 1111, 1112. For example, when the heat pump is set to a heating mode, cold water may be supplied to the outdoor unit 1110, and hot water may be supplied from the outdoor unit 1110.

According to an embodiment, the cooling and heating control device 140 may be connected to the hot water supply part 1120 and/or the heating part 1130 through a plurality of indoor pipes 1121, 1122.

The cooling and heating control device 140 may distribute water, which is supplied from the outdoor unit 1110, to at least one of the hot water supply part 1120 and the heating part 1130 through the plurality of indoor pipes 1121, 1122, and may supply water, which is delivered from at least one of the hot water supply part 1120 and the heating part 1130, to the outdoor unit 1110.

To this end, the cooling and heating control device 140 may further include a plurality of valves (not shown) for water distribution.

For example, the heating part 1130 may include a heat radiation pipe (not shown) connected to the plurality of indoor pipes 1121, 1122. Hot water supplied through any one of the plurality of indoor pipes 1121, 1122 may be used along a heat radiation pipe to heat an indoor floor, and cold water discharged after having undergone the heat exchange while passing through the heat radiation pipe may be delivered to the cooling and heating control device 140 through the other of the plurality of indoor pipes 1121, 1122.

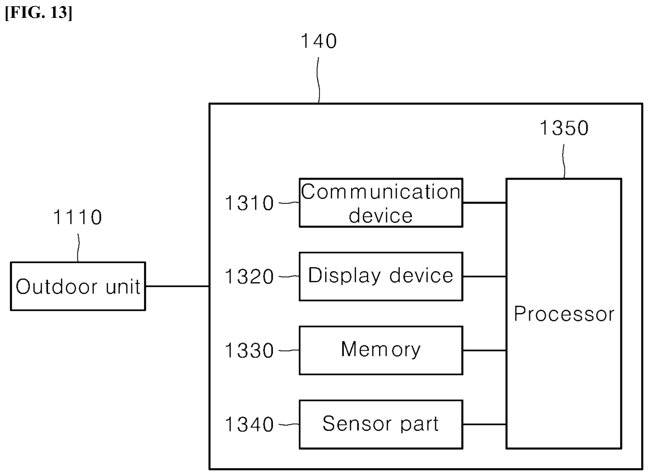

FIG. 13 is a block diagram of a cooling and heating control device for controlling cooling and heating in a home according to an embodiment of the present disclosure.

Referring to FIG. 13, the cooling and heating control device 140 for controlling cooling and heating in a home according to an embodiment of the present disclosure may include a communication device 1310, a display device 1320, a memory 1330, a sensor part 1340, and a processor 1350.

The configuration of the cooling and heating control device 140 shown in FIG. 13 is one according to an embodiment, and the components of the cooling and heating control device 140 are not limited to the embodiment shown in FIG. 13, and the addition, modification and removal of components may be made as needed.

According to an embodiment, the communication device 1310 may perform wired communication or wireless communication with the outdoor unit 1110. For example, the communication device 1310 may include at least one circuit capable of transmitting and receiving at least one signal or piece of information with the outdoor unit 1110 via the server 310 through wireless communication. For example, the communication device 1310 may transmit a control signal based on an energy level to the outdoor unit 1110 via the server 310 through wireless communication.

Alternatively, the communication device 1310 may include at least one circuit capable of transmitting and receiving at least one signal or piece of information with the outdoor unit 1110 through wired communication (or wireless communication). For example, the communication device 1310 may directly transmit a control signal based on an energy level to the outdoor unit 1110 through wired communication.

According to an embodiment, the communication device 1310 may perform wireless communication with the energy storage system 130 and the portable terminal 150 (e.g., a smartphone, a laptop, a tablet PC, or a remote controller for remotely controlling the cooling and heating control device 140) based on various communication methods (e.g., Bluetooth, WLAN (Wireless Local Area Network), NFC (Near Field Communication), or Beacon). And the cooling and heating control device 140 may operate based on an energy level through such communication.

According to an embodiment, the display device 1320 may display various information related to the operation of the cooling and heating control device 140. For example, the display device 1320 may display various information related to a state in which the cooling and heating control device 140 is operating based on an energy level (e.g., set temperature, current temperature, operation time, remaining time, or the like).

According to an embodiment, the memory 1330 may include a volatile memory or a non-volatile memory. And the memory 1330 may store information, data, programs, applications, and the like required for the operation of the cooling and heating control device 140.

In addition, the memory 1330 may store instructions setting an energy level based on information on operation time, set temperature, charge rate of the battery 134, amount of power of the solar panel 120, and the like according to each energy level.

For example, the processor 1350 may store in the memory 1330 information related to an energy level, which is generated by itself or received from the server 310.

According to an embodiment, the sensor part 1340 may include at least one sensor measuring the temperature of hot water, and may transmit, to the processor 1350, data regarding a sensing value sensed through the at least one sensor. This sensor may be disposed in at least one of the plurality of outdoor pipes 1111, 1112 and the plurality of indoor pipes 1121, 1122 of the cooling and heating control device 140 to measure the temperature of hot water supplied from the outdoor unit 1110.

Additionally, at least one sensor of the sensor part 1340 may be disposed inside the outdoor unit 1110, the cooling and heating control device 140, the hot water supply part 1120, the heating part 1130, or the like. The present disclosure does not limit such disposition position of the sensor, and the sensor may be disposed in various locations.

And the sensor part 1340 may include a heat exchanger temperature sensor disposed in the outdoor heat exchanger 1240, at least one pressure sensor detecting the pressure of the refrigerant flowing through each pipe, and at least one pipe temperature sensor detecting the temperature of a fluid flowing through each pipe.

Additionally, the sensor part 1340 may include a temperature sensor sensing the temperature inside a housing of the outdoor unit 1110.

According to an embodiment, the processor 1350 may control the operation of the cooling and heating control device 140 through data stored in the memory 1330 (e.g., data related to an energy level). The communication part 135 or processor 1350 may include at least one circuit capable of controlling the operation of the cooling and heating control device 140.

According to an embodiment, the processor 1350 may be implemented as at least one physical element selected from among ASICs (application specific integrated circuits), DSPs (digital signal processors), DSPDs (digital signal processing devices), PLDs (programmable logic devices), FPGAs (field programmable gate arrays), processors, microcontrollers, and microprocessors.

According to an embodiment, the processor 1350 may receive power state information of the energy storage system 130 (e.g., a state of charge of the battery 134, an amount of power of the solar panel 120, and the like) to set an energy level. Additionally, the processor 450 may set a temperature for each energy level.

Table 1 below illustrates a classification of energy levels according to the present disclosure.

**[Table 1]**

| Energy state | Energy level determination conditions | | |
|---|---|---|---|
| | Battery charge amount % | Solar panel power generation amount | Standby time |
| First level (On Command(++)) | A≥0% | B≥3kW | C≥1 minute |
| Second level (On Recommend(+)) | 70%≤A<90% | 1.5kW≤B<3kW | C≥5 minutes |
| Third level (Normal) | N/A | N/A | N/A |
| Fourth level (Energy saving) | 20%≤A<40% | 0.25kW≤B<0.75kW | C≥5 minutes |
| Fifth level (Energy Super Saving(--)) | A<20% | B<0.25kW | C≥10 minutes |

As shown in Table 1 above, for each energy level, the charge amount % of the battery 134, the power generation amount kW of the solar panel 120, and the standby time are set. For example, the standby time is a time by which the operation of the cooling and heating control device 140 delays in the case where the corresponding energy level is identified.

For example, if the charge amount % of the battery 134 is 90% or more and the power generation amount kW of the solar panel 120 is 3 kW or more, the processor 1350 (or the portable terminal 150) may set the operation of the cooling and heating control device 140 to the first energy level.

Similarly, if the charge amount % of the battery 134 is 70% or more and less than 90%, and the power generation amount kW of the solar panel 120 is 1.5 kW or more and less than 3 kW, the processor 1350 (or the portable terminal 150) may set the operation of the cooling and heating control device 140 to the second energy level.

Additionally, each energy level may have information set therein regarding a power amount supplied to the cooling and heating control device 140.

And, values set in each energy level may be adjusted by the user through manipulation of the portable terminal 150 or the cooling and heating control device 140.

Table 2 below is a table showing the temperatures set for each energy level according to the present disclosure.

**[Table 2]**

| Energy state | Temperature set in energy level | | |
|---|---|---|---|
| | Heating operation | Cooling operation | Hot water supply operation |
| First level (On Command(++)) | +5°C | -5°C | +30°C |
| Second level (On Recommend(+)) | +2°C | -2°C | +10°C |
| Third level (Normal) | 0°C~+20°C | -20°C~0°C | 0°C~+30°C |
| Fourth level (Energy saving) | -2°C | +2°C | Maintaining |
| Fifth level (Energy Super Saving(--)) | -5°C | +5°C | Maintaining |

As in Table 2 above, the temperatures set in respective energy levels (e.g., heating operation, cooling operation, hot water supply operation) may be different from one another.

For example, when the energy state is at the first level, the processor 1350 heats the hot water to a temperature 5°C higher than a set temperature in the case of heating operation, and heats the hot water to a temperature 5°C lower than the set temperature in the case of cooling operation. And, in the case of hot water supply operation, the hot water is heated to a temperature 30°C higher than the set temperature.

Similarly, when the energy state is at the second level, the processor 1350 heats the hot water to a temperature 2°C higher than a set temperature in the case of heating operation, and heats the hot water to a temperature 2°C lower than the set temperature in the case of cooling operation. And, in the case of hot water supply operation, the hot water is heated to a temperature 10°C higher than the set temperature. The above-described temperatures corresponding to the heating operation, cooling operation, and hot water supply operation according to the levels are merely examples, and in the present disclosure, they may be variably adjusted or set to various temperatures.

And, the processor 1350 may set the energy level based on Table 1 and Table 2 above. And, these Table 1 and Table 2 may be stored in the memory 1330.

As such, when the energy level is set based on the charge amount of the battery 134 and the power amount of the solar panel 120, the processor 1350 may operate the outdoor unit 1110 to heat the hot water based on the current state of charge of the battery 134 and the current power of the solar panel 120.

As such, the processor 1350 may allow a heating control device to heat the hot water through the outdoor unit 1110 to a first temperature based on the first level, or to a second temperature lower than the first temperature based on the second level.

Additionally, the processor 1350 may allow the heating control device to heat the hot water if the current temperature of the hot water is equal to or less than the set temperature based on the third level, and may allow the heating control device not to heat the hot water if the current temperature of the hot water is equal to or greater than the set temperature.

Additionally, the processor 1350 may allow the heating control device not to heat the hot water based on the fourth level and the fifth level.

The above-described first to fifth levels may be set based on the charge ratio of the battery 134 and the amount of power supplied from the solar panel, and may be stored in the memory 1330. And, the hot water temperature, set temperature, and operation time set for each level may be variably adjusted.

According to an embodiment, the processor 1350 may identify which energy level among the set energy levels the battery 134 currently corresponds to based on at least one of the current state of charge of the battery 134 and the current amount of power of the solar panel 120. And, the processor 1350 may control the operation of the cooling and heating control device 140 based on the energy level.

According to an embodiment, the processor 1350 may operate the energy control device 130 in different modes based on the current state of charge of the battery 134 and the current amount of power of the solar panel 120.

For example, when the current charge rate of the battery 134 exceeds a first ratio (e.g., 90%) and the current amount of power of the solar panel 120 exceeds a first reference amount (e.g., 3 kW), the processor 1350 may operate the energy storage system 130 in a first mode so that the heating control device receives power charged in the battery 134 to heat hot water.

For example, when the current charge rate of the battery 134 is less than or equal to the first ratio (e.g., 90%) and greater than a second ratio (70%) and the current amount of power of the solar panel 120 is less than or equal to the first reference amount (e.g., 3 kW) and greater than a second reference amount (e.g., 1.5 kW), the processor 1350 may operate the energy storage system 130 in a second mode so that the heating control device receives power charged in the battery 134 to heat hot water. For example, the set temperature and operation time set in the second mode may be lower or shorter than the set temperature and operation time set in the first mode.

For example, when the current charge rate of the battery 134 is less than or equal to the second ratio (70%) and the current amount of power of the solar panel 120 is less than or equal to the second reference amount (e.g., 1.5 kW), the processor 1350 may operate the energy storage system 130 in a third mode so that power supplied from the solar panel 120 is charged into the battery 134.

According to an embodiment, the processor 1350 may control at least one of an operation time and an operation intensity of the cooling and heating control device 140 based on the energy level.

For example, when the energy level is the first level or the second level, the processor 1350 may operate the cooling and heating control device by receiving power charged in the battery 134, or may operate the cooling and heating control device by receiving power delivered from the solar panel 120, or may operate the cooling and heating control device by receiving both the power charged in the battery 134 and the power delivered from the solar panel 120.

According to an embodiment, the processor 1350 may generate a control signal that allows the cooling and heating control device 140 to be controlled at different levels for each energy level, and may operate the cooling and heating control device 140 based on the generated control signal.

According to an embodiment, the processor 1350 may receive information related to adjustment of at least one of the energy level and the operation time from the portable terminal 150 through the communication device 1410. And, the processor 1350 may control the operation of the cooling and heating control device 140 based on the received information.

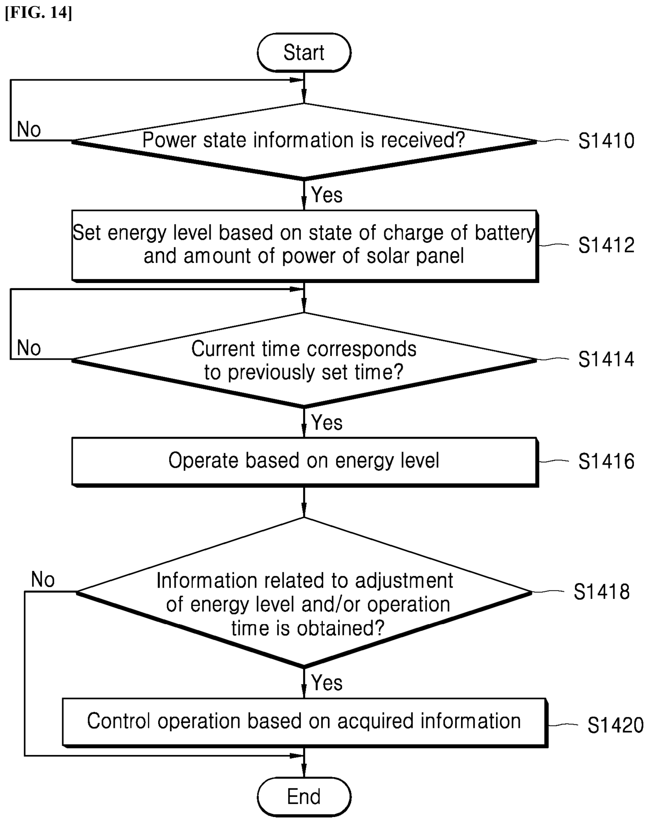

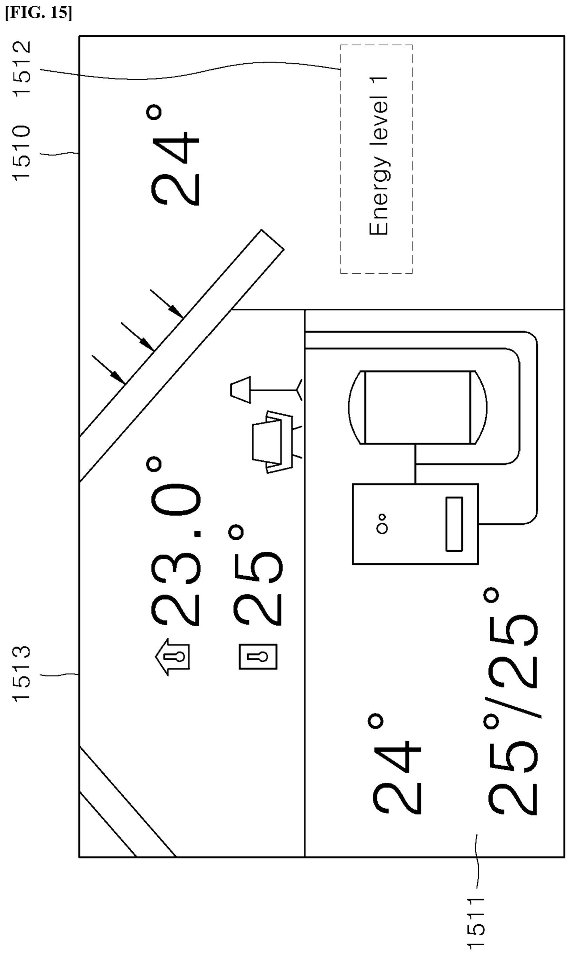

FIG. 14 is a flowchart showing an operation process of the cooling and heating control device according to an embodiment of the present disclosure. FIG. 15 is an example diagram showing an operation state of the cooling and heating control device according to an embodiment of the present disclosure.

Hereinafter, with reference to FIGS. 11 to 15, the operation process of the cooling and heating control device according to an embodiment of the present disclosure will be described in detail as follows.

According to an embodiment, the processor 1350 may identify whether power state information is received from the energy storage system 130 (S1410). When the energy storage system 130 and the cooling and heating control device 140 are capable of communicating through a wired connection, the processor 1350 may receive power status information regarding a current state of charge of the battery 134 and an amount of power supplied from the solar panel 120 from the energy storage system 130 through wired communication (e.g., RS485).

If the energy storage system 130 and the cooling and heating control device 140 are not connected through wired communication, and the cooling and heating control device 140 is capable of wireless communication with the server 310, the processor 1350 may receive information including a power state regarding a current state of charge of the battery 134 and an amount of power supplied from the solar panel 120 from the server 310 via a router (not shown) in the home.

According to an embodiment, the processor 1350 may set an energy level based on the state of charge of the battery and the amount of power of the solar panel (S1412). The processor 1350 may set the energy level causing the cooling and heating control device 140 to operate, based on the current state of charge of the battery 134 and the amount of power supplied from the solar panel 120.

The energy levels may include: a first level in which hot water is heated to a temperature (e.g., 30°C) higher than a set temperature (e.g., 20°C); a second level in which hot water is heated to a temperature (e.g., 25°C) higher than a set temperature (e.g., 20°C); a third level in which hot water is heated if the current temperature of the hot water is equal to or lower than the set temperature (e.g., 20°C), and not heated if it is higher than the set temperature; and a fourth level and a fifth level in which the hot water is not heated even when the current temperature of the hot water is lower than the set temperature (e.g., 20°C). For example, a temperature (e.g., 15°C) set in the fourth level and a temperature (e.g., 10°C) set in the fifth level may be different.

The processor 1350 may adjust an amount of power supplied to the hot water supply part 1120 and the heating part 1130, temperature control, and operation time so that the cooling and heating control device 140 operates based on each of these energy levels.

According to an embodiment, the processor 1350 may identify whether a current time is a previously set time (S1414). The processor 1350 may periodically identify whether the current time has reached a time set in the energy level. This is for performing the operation based on the corresponding energy level when the current time reaches the set time.

According to an embodiment, the processor 1350 may operate based on the energy level (S1416). For example, the processor 1350 may adjust an amount of power, temperature control, and operation time for the hot water supply part 1120 and the heating part 1130, based on a set temperature, operation time, and standby time related to hot water, according to each energy level.

For example, the processor 1350 may transmit a control signal for controlling the operation of the energy storage system 130 based on the energy level to the energy storage system 130 using wired communication. Alternatively, the processor 1350 may also transmit a control signal for controlling the operation of the energy storage system 130 based on the energy level to the energy storage system 130 via the server 310 using wireless communication.

This control signal may include an instruction for controlling the power supply of the battery 134 in order to heat hot water.

The energy storage system 130 that has received this control signal may operate in any one of the first mode to the third mode.

According to an embodiment, the processor 1350 may identify whether information related to adjustment of the energy level and/or operation time is obtained (S1418). Additionally, the processor 1350 may also receive information related to adjustment of at least one of the energy level and the operation time from the portable terminal 150 via the server 310.

In this case, the processor 1350 may analyze information related to the adjustment to identify an adjusted energy level, and may generate instructions causing the cooling and heating control device 140 to be controlled based on the identified energy level.

These instructions may be ones controlling at least one of a set temperature, operation time, and operation intensity (e.g., RPM of a motor) of the cooling and heating control device 140, or may be ones controlling (e.g., permitting or blocking) the supply of power charged in the battery 134 to the cooling and heating control device 140.

Additionally, the instructions may include a set temperature for hot water heated by the heating control device, an operation time and a standby time of the heating control device, and the like.

According to an embodiment, the processor 1350 may control an operation based on the acquired information (S1420). The processor 1350 may control the operation of the cooling and heating control device 140 and the outdoor unit 1110 based on the information received from the portable terminal 150. For example, the processor 1350 may heat hot water based on a hot water temperature, a set temperature, and an operation time corresponding to the energy level.

Additionally, the processor 1350 may control operations of the cooling and heating control device 140 and the outdoor unit 1110 so that hot water is heated based on the above [Table 1] and [Table 2] at a set time included in the information received from the portable terminal 150.

Additionally, the processor 1350 may control the RPM of at least one of the motors (e.g., 1221 and 1252 of FIG. 12) of the outdoor unit 1110 to operate the motor at the set time. This set time may include a time period during which noises caused by the operation of the outdoor unit 1110 disposed outside do not disturb neighbors.

As such, by operating the outdoor unit of the cooling and heating control device 140 in advance based on the set time during a time period during which the noises are not considered as a sensitive matter (e.g., a time period during which the noises do not disturb neighbors), the present disclosure may fundamentally prevent noises from affecting surrounding individuals.

Referring to FIG. 15, the cooling and heating control device 140 may display a screen 1510 including information regarding the operation state on the display device 1320. Alternatively, the cooling and heating control device 140 may transmit information regarding an operation state to the portable terminal 150 via the server 310.

The screen 1510 may include information on a room temperature 1513, an outside temperature 1510, a set temperature 1511, and an energy level 1512.

Additionally, when the energy level is changed, the screen 1510 may include various information set in the changed energy level (e.g., at least some of the state of charge of the battery 134, the power generation amount of the solar panel 120, the standby time, and the hot water temperature, which classify the levels).

Additionally, the cooling and heating control device 140 (e.g., heating control device) may, based on the set temperature and operation time included in the received control signal, initiate heating hot water for that operation time.

As described above, by pre-heating the water to be used by the user prior to the user's return, the above-described cooling and heating control device 140 (e.g., heating control device) can allow the user to immediately utilize hot water as soon as the user has returned home, thereby providing use convenience.

In the above, each step in each of the above-mentioned flowcharts may be performed regardless of the illustrated order, or may be performed concurrently. Additionally, at least one component of the present disclosure and at least one operation performed in the at least one component may be implemented by hardware and/or software.

Although the present disclosure has been described with reference to the illustrative drawings as the above, the present disclosure is not limited to the embodiments and drawings disclosed in this specification, and it is obvious that various modifications can be made by those skilled in the art without departing from the scope of the technical idea of the present disclosure. Additionally, even if the effects related to the configuration of the present disclosure were not explicitly described while explaining the embodiments of the present disclosure, it is obvious that the effects predictable from the configuration should also be acknowledged.

## Claims

1. A device for controlling cooling and heating in a home, the device comprising:
a communication device providing communication with at least one of an energy storage system and a server; and
a processor configured to acquire power state information of the energy storage system through the communication device, to set energy levels based on a state of charge of a battery of the energy storage system and an amount of power of a solar panel, which are included in the acquired power state information, to identify one energy level among the set energy levels, and to operate a cooling and heating control device based on the identified energy level.

2. The device of claim 1, wherein the processor operates the cooling and heating control device in different modes based on a current state of charge of the battery and a current amount of power of the solar panel.

3. The device of claim 1, wherein, based on the power state information, the processor:
heats hot water to a first temperature using power charged in the battery when a current charge rate of the battery exceeds a first ratio and a current amount of power of the solar panel exceeds a first reference amount; and
heats hot water to a second temperature lower than the first temperature using power charged in the battery when a current charge rate of the battery is less than or equal to the first ratio and greater than a second ratio and a current amount of power of the solar panel is less than or equal to the first reference amount and greater than a second reference amount.

4. The device of claim 1, wherein, based on the energy levels, the processor controls at least one of an operation time, a hot water temperature, and an operation intensity of the cooling and heating control device.

5. The device of claim 2, wherein the energy levels include:
a first level in which a heating control device heats hot water to a first temperature; a second level in which the heating control device heats hot water to a second temperature lower than the first temperature; a third level in which the heating control device heats hot water when a current temperature of hot water is less than or equal to a set temperature and the heating control device does not heat hot water when the current temperature of hot water is higher than or equal to a set temperature; a fourth level and a fifth level in which hot water is not heated even when the current temperature of hot water is lower than a set temperature, and
wherein the set temperature of the fourth level is higher than the set temperature of the fifth level.

6. The device of claim 5, wherein, when the identified energy level is the first level or the second level, the processor:
operates the heating control device using power charged in the battery; or
operates the heating control device using power delivered from a solar panel; or
operates the heating control device using both power charged in the battery and power delivered from the solar panel.

7. The device of claim 5, wherein, when the identified energy level is the fourth level or the fifth level, the processor prevents the heating control device from being operated with power charged in the battery.

8. The device of claim 1, wherein, when receiving information on energy level from the energy storage system through the communication device, the processor controls an operation of the cooling and heating control device based on the received energy level.

9. The device of claim 1, wherein the processor is configured to, when information related to adjustment of at least one of an energy level, hot water temperature, and operation time is received from a portable terminal via the server, control an operation of the cooling and heating control device based on the received information.

10. A method of a device for controlling cooling and heating in a home, the method comprising:
a process of acquiring power state information of an energy storage system;
a process of setting energy levels based on a state of charge of a battery of the energy storage system and an amount of power of a solar panel, which are included in the acquired power state information;
a process of identifying one energy level among the set energy levels; and
a process of operating a cooling and heating control device based on the identified energy level.

11. The method of claim 10, wherein the process of operating the cooling and heating control device includes a process of, based on the energy levels, controlling at least one of an operation time, a hot water temperature, and an operation intensity of the cooling and heating control device.

12. The method of claim 11, wherein the energy levels include:
a first level in which a heating control device heats hot water to a first temperature; a second level in which the heating control device heats hot water to a second temperature lower than the first temperature; a third level in which the heating control device heats hot water when a current temperature of hot water is less than or equal to a set temperature and the heating control device does not heat hot water when the current temperature of hot water is higher than or equal to a set temperature; a fourth level and a fifth level in which hot water is not heated even when the current temperature of hot water is lower than a set temperature, and
wherein the set temperature of the fourth level is higher than the set temperature of the fifth level.

13. The method of claim 10, wherein the process of operating the cooling and heating control device further includes a process of transmitting, to the energy storage system, a signal to operate the energy storage system in different modes based on a current state of charge of the battery and a current amount of power of the solar panel.

14. The method of claim 10, wherein the process of operating the cooling and heating control device includes a process of, when the energy level is a first level in which a heating control device heats hot water to a first temperature, or a second level in which the heating control device heats hot water to a second temperature lower than the first temperature,
operating the heating control device using power charged in the battery, or
operating the heating control device using power delivered from a solar panel, or
operating the heating control device using both power charged in the battery and power delivered from the solar panel.

15. The device of claim 14, wherein the process of operating the cooling and heating control device includes a process of preventing the heating control device from being operated with power charged in the battery when the energy level is a fourth level or a fifth level in which hot water is not heated when a current temperature of hot water is lower than a set temperature.

16. The method of claim 10, further comprising:
a process of, when information related to adjustment of at least one of an energy level, hot water temperature, and operation time is received from a portable terminal via a server,
controlling an operation of the cooling and heating control device based on the received information.

17. A portable terminal for controlling cooling and heating in a home, the portable terminal comprising:
a communication device;
a display device; and
a processor electrically connected with the communication device and the display device,
wherein the processor is configured:
to acquire information of state of charge of a battery of an energy storage system and
information of amount of power of a solar panel through the communication device;
to set an energy level based on the state of charge of the battery and the amount of power of the solar panel; and
to, when at least one of the energy level, a hot water temperature, and an operation time of the energy storage system is adjusted, transmit information related to the adjustment through the communication device.

18. The portable terminal of claim 17, wherein the processor is configured to display a screen related to the set energy level on an application through the display device, and
wherein the energy level is displayed while being adjusted by a touch-and-drag-based input on the screen.

19. A system for controlling cooling and heating in a home, the system comprising:
an energy storage system transmitting power state information to a heating control device; and
a cooling and heating control device setting energy levels based on a state of charge of a battery and an amount of power of a solar panel, which are included in the power state information, identifying one energy level among the set energy levels based on a current state of charge of the battery and a current amount of power of the solar panel, and operating based on the identified energy level.

20. The system of claim 19, further comprising:
a portable terminal transmitting information related to adjustment of at least one of the set energy levels and an operation time of the cooling and heating control device,
wherein the cooling and heating control device operates based on the information transmitted by the portable terminal.
